# EUROPÄISCHE PATENTSCHRIFT

(11) **EP 3 563 520 B1**
(45) Veröffentlichungstag und Bekanntmachung des Hinweises auf die Patenterteilung: **07.04.2021**
(21) Anmeldenummer: 17822345.9
(22) Anmeldetag: 29.12.2017
(51) Int. Cl.: H04L 12/26, H04L 12/24

(54) **KOMMUNIKATION EINES NETZWERKKNOTENS IN EINEM DATENNETZ**
COMMUNICATION BY A NETWORK NODE IN A DATA NETWORK
COMMUNICATION D'UN NOEUD DE RÉSEAU DANS UN RÉSEAU DE DONNÉES

(30) Priorität: 30.12.2016 AT 511962016
(43) Veröffentlichungstag der Anmeldung: 06.11.2019
(73) Patentinhaber: AVL List GmbH, 8020 Graz (AT)
(72) Erfinder: PRILLER, Peter, 8111 Gratwein-Straßengel (AT)
(74) Vertreter: Patentanwälte Pinter & Weiss OG
(86) Internationale Anmeldenummer: PCT/EP2017/084798
(87) Internationale Veröffentlichungsnummer: WO 2018/122367

(56) Entgegenhaltungen:
- WO-A1-2017/102699
- WO-A2-2006/014205
- US-B2- 7 309 907

## Beschreibung

Die Erfindung betrifft ein Verfahren zum Aufbau einer Kommunikationsverbindung zwischen einem Netzwerkknoten und einem Kommunikationspartner in einem Datennetz, wobei der Netzwerkknoten zumindest eine Mitteilung über eine Drahtlosschnittstelle von dem Kommunikationspartner empfängt und wobei der Mitteilung Verifikationsdaten beigefügt sind.

Eine Vielzahl unterschiedlicher Geräte wurde in jüngerer Zeit mit der Möglichkeit einer drahtlosen Konnektivität, beispielsweise über Funkverbindungen, ausgestattet. Um den Benutzern die oftmals mühsame Arbeit der Einrichtung eines Datennetzes abzunehmen, können solche Geräte Kommunikationsverbindungen zu anderen kompatiblen Geräten oft von sich aus automatisch aufbauen, sodass mehrere dieser Geräte ein Ad-Hoc-Netzwerk bilden, sobald sie aktiv und im gegenseitigen Empfangsbereich sind. Beispiele solcher Netzwerke aus dem Anwenderbereich sind etwa die automatische Ankopplung eines Smartphones an das Audiosystem eines Fahrzeuges, beispielsweise über den bekannten Bluetooth-Standard, beispielsweise um das Audiosystem als KFZ-Freisprecheinrichtung zu nutzen. Im Zuge der als "Internet-of-Things" bekannten Entwicklung wird diese Fähigkeit auf andere Gegenstände des alltäglichen Gebrauchs ausgeweitet, sodass etwa Haushaltsgegenstände, Smartphones, HiFi-Geräte, Hausinstallationen, Sensoren, Steuergeräte, etwa für Raumklima, und ähnliche Geräte untereinander kommunizieren können, ohne dass dies dem Benutzer unbedingt bewusst sein muss.

Dadurch lassen sich zwar für den Benutzer enorme Vorteile verwirklichen, allerdings steigen auch die Missbrauchsmöglichkeiten, etwa in Form von Hackerangriffen, mit der weiteren Vernetzung enorm an. Durch IoT (Internet of Things) in Kombination mit drahtloser Kommunikation besteht die Gefahr, dass Angreifer durch Verwenden einer vorgespiegelten Identität Kommunikation zu technischen Systemen aufnehmen können, und vielleicht dadurch unberechtigt Zugriff auf Daten bekommen, oder Funktionen aktivieren, oder unberechtigte Änderungen durchführen können (security exploit). Daher muss vor einem automatischen Aufbau einer Datenkommunikation von jedem Gerät sichergestellt werden, dass die Kommunikationspartner vertrauenswürdig sind.

Diese Feststellung bzw. Prüfung der Vertrauenswürdigkeit wird im Zusammenhang mit der gegenständlichen Offenbarung allgemein als "Verifizieren" bezeichnet. Der Vorgang des Verifizierens kann beispielsweise eine Prüfung umfassen, ob der Kommunikationspartner Teil desselben Systems ist. Im obengenannten Beispiel könnte dieses System etwa alle Kommunikationspartner in einem Fahrzeug umfassen, wobei ausgeschlossen werden muss, dass Geräte außerhalb des Fahrzeugs oder in benachbarten Fahrzeugen in das Ad-Hoc-Netzwerk eingebunden werden. Derzeit geschieht das Verifizieren meist "händisch", indem etwa der Benutzer eines Smartphones aufgefordert wird, einen an einer Anzeige des Fahrzeugs angezeigten Code einzugeben, bevor eine Verbindung zwischen dem Fahrzeugsystem und dem Smartphone hergestellt wird.

Sicherheitsbedenken sind auch der Grund, warum im industriellen Bereich und im Bereich von Systemen mit erhöhten Sicherheitserfordernissen der Einsatz von selbstständig kommunizierenden Geräten problematisch sein kann. Auch hierbei muss daher die Berechtigung zur Datenkommunikation zwischen einzelnen Geräten vom Anwender definiert werden. Bei höheren Sicherheitserfordernissen kann die Verbindung auch verschlüsselt aufgebaut werden, wobei insbesondere der Austausch der Verschlüsselungsschlüssel (encryption keys) für Angriffe anfällig ist.

Indem Messgeräte in einer industriellen Anwendung, beispielsweise in einem Prüfstand befindliche Messgeräte, sich über eine ad-hoc aufgebaute drahtlose Kommunikation verbinden und Daten austauschen können, gegebenenfalls auch unabhängig von der eigentlichen Übertragung der Messdaten zu einem Automatisierungssystem, können zusätzlich Merkmale implementiert und ein Zusatznutzen für den Kunden geschaffen werden. Neben den oben dargelegten Sicherheitsüberlegungen muss sichergestellt werden, dass die Geräte tatsächlich am selben Prüfstand eingesetzt sind, da drahtlose Kommunikation auch über Raumgrenzen hinweg möglich ist, und damit auch nicht-zugehörige Geräte (etwa die Geräte die im Nachbarraum in einem anderen Prüfstand verbaut sind) erreichen kann. Weiters muss sichergestellt werden, dass dem Kommunikationspartner vertraut werden kann, es sich also wirklich um ein aktives Messgerät handelt, und es nicht durch ein unberechtigtes, im gleichen Raum oder im Nachbarraum befindliches und/oder verstecktes Gerät nur vorgetäuscht wird. Besonders relevant können diese Sicherheitsvorkehrungen sein, wenn Prüfstände an unterschiedliche Firmen vermietet werden, sodass es vorkommen kann, dass Konkurrenten in benachbarten Räumen gleichzeitig Prüfungen durchführen. Auch bei drahtlosen Sensornetzwerken, bei denen die Messdaten drahtlos zu einem Automatisierungssystem übermittelt werden, stellt sich diese Problematik. Die Zugehörigkeit eines Geräts zu einem bestimmten Prüfstand oder Prüfling muss daher derzeit per Hand z.B. von Prüfstandtechnikern konfiguriert werden. Dies kann beispielsweise durch die Eingabe einer Seriennummer oder die Bekanntgabe weiterer Merkmale erfolgen, oder auch andere, nicht vollständig automatisierbare Aktionen beinhalten. Durch diesen manuellen Vorgang wird angenommen, dass die eingebende Person im Zuge dessen auch die Echtheit des Geräts überprüft hat, auch hier ergeben sich Sicherheitsrisiken. Der Vorgang ist derzeit nicht vollständig automatisierbar und Fehler bei der Angaben der Echtheit sind nachträglich nicht überprüfbar.

Ein weiterer Anwendungsfall, bei dem die obengenannten Sicherheitsprobleme relevant sind, ist die bereits erwähnte Vernetzung von in einem Fahrzeug verteilten, (drahtlos) kooperierenden Systemen (Steuergeräte, Sensoren, etc.), sei es in Verbindung mit mobilen Messsystemen für Prüfzwecke, oder sei es für das serienfertige Fahrzeug.

WO 2006/014205 A2 offenbart ein System zur Identitätsprüfung bei der Verwendung von Smartcards. Die Smartcards weisen einen biometrischen Sensor auf, beispielsweise einen Fingerabdruck-Scanner. Die Smartcards stellen drahtlos über Access-Points eine Verbindung mit einem Datenbankserver her, wobei zum Identitätsnachweis ein vom Smartcard-Scanner eingescannter Fingerabdruck an den Server übermittelt und dort mit gespeicherten Werten verglichen wird.

US 7309907 B2 offenbart ein System zur Prüfung der Validität einer mit einer Halbleitervorrichtung versehenen Karte, wobei gegebenenfalls eine Manipulation eines Sicherheitselements erkannt wird.

WO 2017/102699 A1 offenbart ein mittels einer Lesevorrichtung auslesbares ID-Token, das z.B. in einem ID-Dokument zum Identitätsnachweis vorgesehen ist. Das ID-Token umfasst einen ersten, ungeschützten Mikrocontroller und eine zweiten, geschützten Mikrocontroller, die miteinander kontaktbehaftet kommunizieren. Im geschützten Mikrocontroller ist ein Attribut gespeichert, das beispielsweise Angaben über die Identität eines Nutzers beinhaltet. Will ein Lesegerät das Attribut auslesen, kommuniziert es mit dem ersten Mikrocontroller. Der erste Mikrocontroller erfasst dann mit einem Sensor (z.B. einem Fingerabdrucksensor) Messdaten (z.B. einen Fingerabdruck) und übermittelt die Messdaten an den zweiten, geschützten Mikrocontroller. Dieser vergleicht die Messdaten mit gespeicherten Messdaten und übermittelt das Attribut nur dann an den ersten Mikrocontroller, wenn die Messdaten übereinstimmen. In dem Fall sendet der erste Mikrocontroller das Attribut weiter an das Lesegerät.

Es ist eine Aufgabe der gegenständlichen Erfindung, den Verbindungsaufbau von Ad-Hoc-Netzwerken sicherer und gleichzeitig einfacher zu gestalten, wobei insbesondere die oben beschriebenen Nachteile des Standes der Technik vermieden werden sollen.

Erfindungsgemäß werden diese und weitere Aufgaben durch ein Verfahren der eingangs genannten Art gelöst, bei dem die Verifikationsdaten ein Sender-Messdatenabbild beinhalten, welches für vom Kommunikationspartner in einer vorhergehenden Aufzeichnungsperiode erfasste Messdaten repräsentativ ist, wobei der Netzwerkknoten den Kommunikationspartner verifiziert, indem das in den empfangenen Verifikationsdaten enthaltene Sender-Messdatenabbild anhand einer dem Netzwerkknoten bekannten und/oder vom Kommunikationspartner dem Netzwerkknoten mitgeteilten Korrelation mit einem Empfänger-Messdatenabbild verglichen wird, das unabhängig vom Sender-Messdatenabbild erstellt wurde und das in einem Datenspeicher des Netzwerkknotens gespeichert ist, und wobei eine Übereinstimmung der Messdatenabbilder belegt, dass sich der Kommunikationspartner in der selben Messumgebung befindet, wie der Netzwerkknoten. Dies erlaubt ein automatisches Erkennen und Verifizieren des Kommunikationspartners durch den Netzwerkknoten ohne zusätzliche manuelle Interaktion. Die teilnehmenden Geräte verfügen dabei über eine gemeinsame, synchrone Zeitinformation, dies kann beispielsweise über den Empfang eines Funkuhrsignals oder durch lokal drahtlos versendete Zeitstempel sichergestellt werden. Erfindungsgemäß kann unterschieden werden, ob ein Kommunikationspartner nur vorgibt, der gleichen Messumgebung anzugehören, oder ob er tatsächlich anwesend ist.

Das erfindungsgemäße Verfahren kann beispielsweise in einem Fahrzeug verwendet werden. Dieses könnte beispielsweise erkennen, ob ein Smartphone eines Nutzers / einer Nutzerin sich im Fahrzeug befindet und mitgefahren ist oder nicht. Nur im Fall "mitgefahren" wird eine vertrauenswürdige Verbindung aufgebaut (z.B. über Bluetooth). Auch die Anwendung in größerem Kontext, beispielsweise zur Identifikation und sicheren Authentifizierung von über V2V (C2C) kommunizierenden Fahrzeugen und die Zuordnung zur Umgebung des eigenen Fahrzeugs kann das erfindungsgemäße Verfahren nutzen.

Das Empfänger-Messdatenabbild kann beispielsweise vom Netzwerkknoten als Repräsentation von selbst erfassten Messdaten erstellt werden, was voraussetzt, dass der Netzwercknoten über eine Messdatenerfassung verfügt, etwa wenn der Netzwerkknoten ein Messgerät ist. Das Empfänger-Messdatenabbild kann jedoch auch ein vom Netzwerkknoten erstelltes Messdatenabbild sein, das auf Basis von Messdaten erzeugt wird, die von einer bereits als vertrauenswürdig eingestuften dritten Einheit erhalten wurde. Dies kann beispielsweise dann der Fall sein, wenn der Netzwerkknoten ein Automatisierungssystem ist, das die Messdaten mehrerer Messgeräte empfängt und speichert.

Erfindungsgemäß können der Netzwerkknoten und der Kommunikationspartner unabhängig voneinander eine Messstelle oder ein Automatisierungssystem einer Messumgebung sein. Dies ermöglicht es beispielsweise, dass alle Geräte eines einzelnen Herstellers, die bei einer Prüfstandmessung beteiligt sind, in einem Ad-Hoc-Netzwerk miteinander kommunizieren, und in Abhängigkeit der unterschiedlichen Gerätekombinationen zusätzliche Funktionalitäten bereitstellen. Durch die Verifizierung auf Basis des Messverlaufs ist sichergestellt, dass tatsächlich nur die Geräte verknüpft werden, die am selben Prüfstand aktiv sind. Die Kommunikation kann zwischen den entsprechenden Geräten auch aufgebaut werden, wenn andere Messgeräten (z.B. von Fremdherstellern) in das Prüfsystem eingebunden sind, oder wenn ein Automatisierungssystem verwendet wird, das diesen Aufbau des Ad-Hoc-Netzwerks nicht unterstützt.

Erfindungsgemäß kann in vorteilhafter Weise der Netzwerkknoten auf Basis des Sender-Messdatenabbilds einen Verschlüsselungsschlüssel für eine verschlüsselte Kommunikation mit dem Kommunikationspartner erstellen. Dabei kann der Netzwerkknoten die vom Kommunikationspartner übermittelten Daten des Sender-Messdatenabbilds verwenden.

Andererseits kann eine Übermittlung von Verschlüsselungsinformation vermieden werden, wenn der Netzwerkknoten für die Erstellung des Verschlüsselungsschlüssels gespeicherte Messdaten verwendet. In vorteilhafter Weise kann daher der Netzwerkknoten auf Basis des Empfänger-Messdatenabbilds einen Verschlüsselungsschlüssel für eine verschlüsselte Kommunikation mit dem Kommunikationspartner erstellen. Beispielsweise kann der Netzwerkknoten die dem Sender-Messdatenabbild entsprechende Zeitperiode im Empfänger-Messdatenabbild ermitteln und den Verschlüsselungsschlüssel auf Basis einer zeitversetzten Zeitperiode des Empfänger-Messdatenabbilds erstellen. Der Kommunikationspartner erstellt den Verschlüsselungsschlüssel auf Basis der selben zeitversetzten Zeitperiode des Sender-Messdatenabbilds. Die verschlüsselte Datenübermittlung funktioniert also nur dann, wenn das Sender- und das Empfänger-Messdatenabbild einander entsprechen, d.h. auf Basis von Messungen am selben Prüfstand erzeugt wurden, ohne dass dabei die Datenbasis für den Verschlüsselungsschlüssel über das Datennetzwerk übermittelt werden muss.

Der Begriff "Verschlüsselungsschlüssel" wird im Zusammenhang mit der gegenständlichen Erfindung allgemein für Kryptographieschlüssel verwendet, unabhängig ob dieser zum Ver- oder zum Entschlüsseln einer Nachricht dient und unabhängig ob es sich um eine symmetrisches oder ein asymmetrisches Verschlüsselungsverfahren handelt.

Unterschiede zwischen dem Empfänger-Messdatenabbild und dem Sender-Messdatenabbild können anhand der bekannten Korrelation zwischen Netzwerkknoten und Kommunikationspartner herausgerechnet werden. Die Korrelation kann beispielsweise eine Zeitverzögerung oder eine positive oder negative Verstärkung sein, die einfach herausgerechnet werden können. Wenn jedoch die Eigenschaften von Netzwerkknoten und Kommunikationspartner bekannt sind, können auch komplexere Korrelationen berücksichtigt werden. Gegebenenfalls können auch Parameter eine Anlage, in der der Netzwerkknoten und der Kommunikationspartner eingesetzt sind, zur Ermittlung der Korrelation verwendet werden. Im Fall eines Prüfstandes können beispielsweise Leistungs- und/oder Materialdaten des Prüflings und/oder des Dynamometers berücksichtigt werden. Die Korrelation kann sich beispielsweise durch den Aufbau der Anlage ergeben. Zum Beispiel korreliert bei einem Getriebe die Antriebs- mit der Abtriebsdrehzahl über die Getriebeübersetzung.

In einer vorteilhaften Ausführungsform kann der Netzwerkknoten nach der Verifizierung des Kommunikationspartners auf Basis der Korrelation zumindest einen virtuellen Netzwerkknoten erstellen. Wenn sich beispielsweise aus einem ersten Messwert und einem zweiten Messwert ein dritter Messwert errechnen lässt, kann der Netzwerkknoten (wenn er beispielsweise den ersten Messwert misst) die Kommunikation mit dem Kommunikationspartner (wenn der beispielsweise den zweiten Messwert misst) nutzen, um die Messdaten des Kommunikationspartners in Echtzeit zu empfangen, daraus den dritten Messwert zu errechnen, und dem Automatisierungssystem den dritten Messwert bereitstellen. Das Automatisierungssystem kann die Daten des dritten Messwerts in einem eigenen Kanal so weiter verarbeiten, als wäre der virtuelle Netzwerkknoten ein echtes Messgerät. Wenn der Netzwerkknoten ein Automatisierungssystem ist, kann er den dritten Messwert auch auf Basis eines oder mehrerer Messwerte des Kommunikationspartners bzw. mehrerer Kommunikationspartner erstellen.

In einer bevorzugten Ausführungsform kann das Datennetz ein Ad-Hoc-Netzwerk sein. Als Ad-Hoc-Netzwerk wird ein Datennetz bezeichnet, welches ohne Konfiguration durch einen Benutzer von den beteiligten Geräten (bzw. Netzwerkknoten und Kommunikationspartnern) automatisch aufgebaut wird, sobald diese Geräte sich innerhalb der Reichweiten ihrer Drahtlosschnittstellen befinden. Im Unterschied dazu ist es auch möglich, ein Datennetz auf herkömmliche Weise durch eine vom Benutzer vorgegebene Definition aufzubauen. Das erfindungsgemäße Verfahren kann dann eine zusätzliche Sicherheitsebene bieten.

In einem weiteren Aspekt betrifft die Erfindung einen Netzwerkknoten mit zumindest einem Messumformer, zumindest einer Drahtlosschnittstelle, zumindest einer Prozessoreinheit und zumindest einem Datenspeicher, wobei in dem Netzwerkknoten eine vom Netzwerkknoten ausführbare Programmlogik implementiert ist, und wobei der Netzwerkknoten beim Ausführen der Programmlogik ein zuvor beschriebenes erfindungsgemäßes Verfahren ausführt. Der Netzwerkknoten kann dabei ein beliebiges Gerät sein, das zu einem Aufbau eines Ad-Hoc-Netzwerks geeignet ist. Der Messumformer kann ein Sensor oder eine anderer Messdaten erzeugende Einheit sein. Für mobile Anwendungen kann der Messumformer beispielsweise ein Sensor zur Ermittlung von Positionskoordinaten, insbesondere zur Ermittlung von Geokoordinaten, wie etwa ein GPS-Chip, sein.

In vorteilhafter Weise kann der Netzwerkknoten ein Messgerät für eine Messumgebung sein. Als Messumgebung wird im Zusammenhang mit der gegenständlichen Erfindung eine für eine Prüf- und/oder Analyse- und/oder Steuerungsaufgabe definierter Bereich bezeichnet, beispielsweise ein mobiles oder ortsfestes Labor, eine mobiler oder ortsfester Prüfstand, ein Luft-, Land- und/oder Wasserfahrzeug oder allgemein eine Immobile oder ein Geländebereich.

In einer weiteren vorteilhaften Ausführungsform kann der Netzwerkknoten ein Messgerät oder ein Automatisierungssystem für einen Motorprüfstand sein.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 eine schematische Darstellung eines Ad-Hoc-Netzwerks, welches das erfindungsgemäße Verfahren nutzt,
Fig. 2 eine schematische Darstellung eines Motorprüfstandes, in welchem das erfindungsgemäße Verfahren implementiert ist,
Fig. 3 eine diagrammhafte Gegenüberstellung eines Messsignals und eines daraus abgeleiteten Messdatenabbilds und
Fig. 4 eine diagrammhafte Gegenüberstellung mehrerer Messsignale.

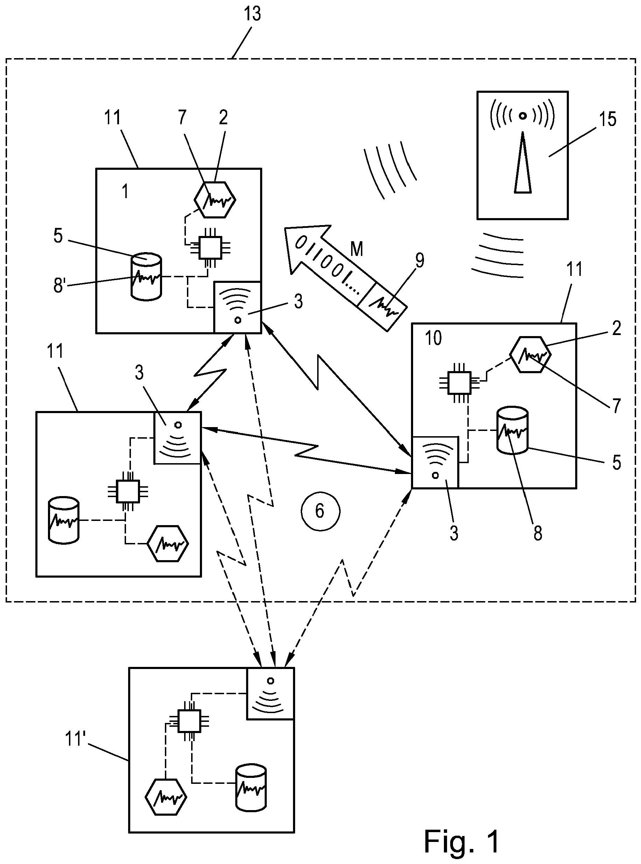

Fig. 1 zeigt schematisch eine Messumgebung 13, in der mehrere Messgeräte 11 angeordnet sind, die jeweils über eine Drahtlosschnittstelle 3 miteinander Daten austauschen können. Jedes Messgerät 11 weist einen Messumformer 2, einen Datenspeicher 5 und eine Prozessoreinheit 4 auf. Ein Zeitsignalgeber 15 stellt allen Messgeräten 11 eine übereinstimmende Zeitinformation zur Verfügung, sodass die Messgeräte 11 die im Datenspeicher 5 gespeicherten Daten je nach Bedarf mit korrespondierenden Zeitinformationen versehen können. Der Zeitsignalgeber 15 kann lokal drahtlos Zeitstempel versenden. Alternativ kann für die Synchronisation der Messgeräte 11 ein Funkuhrsignal genutzt werden.

Aus Gründen der Verständlichkeit wird im Folgenden insbesondere auf die Implementierung der erfindungsgemäßen Verfahren und Vorrichtungen in einer Prüfstandumgebung Bezug genommen, der Fachmann ist jedoch in der Lage, die hierin offenbarten Lehren ohne Weiteres auch auf andere Anwendungsfälle anzuwenden. Als Anwendungsfälle kommen insbesondere Systeme in Frage, bei denen mehrere Geräte in der Lage sind, Ad-Hoc-Netzwerke aufzubauen und zu verwenden.

In Fig. 1 sind drei Messgeräte 11 im Bereich der Messumgebung 13 angeordnet, die jeweils über den Messumformer 2 Messdaten 7 generieren und im Datenspeicher 5 ablegen und/oder über eine beliebige Datenverbindung an ein Automatisierungssystem übermitteln. Die Übermittlung der Messdaten kann über die Drahtlosschnittstelle 3 oder über eine andere (in Fig. 1 nicht dargestellte) Datenverbindung erfolgen.

Zusätzlich sind die Messgeräte 11 in der Lage, untereinander zu kommunizieren und so ein Ad-Hoc-Netzwerk aufzubauen. Dieses Ad-Hoc-Netzwerk (das in Fig. 1 als Datennetzwerk 6 schematisch dargestellt ist) kann beispielsweise alle Geräte eines Herstellers in der Messumgebung 13 umfassen, deren Programmlogik die Verfahren gemäß der gegenständlichen Erfindung unterstützt. Ältere Messgeräte 11, die kein Ad-Hoc-Netzwerk unterstützen, oder Komponenten anderer Hersteller, die nicht am Ad-Hoc-Netzwerk teilnehmen sollen, können weiterhin in der Messumgebung 13 eingebunden sein, bleiben jedoch beim Aufbau des Ad-Hoc-Netzwerks unberücksichtigt.

Der Verbindungsaufbau zwischen zwei Messgeräten 11 wird im Folgenden für einen Netzwerkknoten 1, der eine Kommunikationsverbindung mit einem Kommunikationspartner 10 aufbaut, beschrieben. Sowohl der Netzwerkknoten 1, als auch der Kommunikationspartner 10 sind im dargestellten Fall jeweils ein Messgerät 11 der Messumgebung 13.

Die Bezeichnungen "Netzwerkknoten" und "Kommunikationspartner" dienen im Zusammenhang mit der gegenständlichen Beschreibung lediglich der Klarheit der Beschreibung und der Identifizierbarkeit der Geräte und impliziert keine funktionellen Unterschiede. Je nach Betrachtungsweise kann jedes Gerät im Ad-Hoc-Netzwerk entweder als Netzwerkknoten 1 oder Kommunikationspartner 10 angesehen werden. Das Gerät, das versucht sich als Vertrauenswürdig auszuweisen, wird im Zusammenhang mit der gegenständlichen Beschreibung als Kommunikationspartner 10 bezeichnet, und das Gerät, das eine Verifizierung des Kommunikationspartners 10 vornimmt, wird als Netzwerkknoten 1 bezeichnet.

Alle Messgeräte 11 speichern laufend ein Messdatenabbild der von ihrem Messumformer 2 aufgezeichneten Messdaten 7 in ihrem Datenspeicher, wobei des Messdatenabbild des Kommunikationspartners im Folgenden als Sender-Messdatenabbild 8 und das Messdatenabbild des Netzwerkknotens 1 als Empfänger-Messdatenabbild 8' bezeichnet wird. Die Messdatenabbilder repräsentieren somit einen Verlauf der Messdaten und können über eine definierbare Zeitspanne (z.B. die letzte Stunde) in dem Datenspeicher 5 gespeichert werden.

Die Messgeräte 11 können über bekannte Protokolle eine laufende Erkennung der anderen in Funkreichweite befindlichen Geräte vornehmen und auf Basis bekannte Algorithmen entscheiden, ob eine Verbindung mit aufgefundenen Geräten aufgebaut werden soll.

Im dargestellten Fall versucht der Kommunikationspartner 10 eine Verbindung mit dem Netzwerkknoten 1 aufzubauen. Um sich gegenüber dem Netzwerkknoten 1 als vertrauenswürdiges Gerät auszuweisen, sendet der Kommunikationspartner 10 eine Mitteilung M über die Drahtlosschnittstelle 3, die vom Netzwerkknoten 1 empfangen wird. In der Mitteilung M sind Verifikationsdaten 9 enthalten, die einen Teilbereich des Sender-Messdatenabbildes 8 darstellen, wobei der Bereich entweder durch die aktuelle Zeit definiert ist (z.B. die letzten 2 Sekunden der Messung), und/oder mit einer Zeitangabe ausgewiesen sein kann. Weiters kann die Mitteilung M die üblichen Paketdateninformationen sowie beispielsweise Informationen über den Kommunikationspartner 10 enthalten. Die Zeitspanne kann auch auf Basis bestimmter charakteristischer "Ereignisse" im Messverlauf ermittelt werden, etwa einem Lastwechsel, der den Verlauf der Messdaten 7 beider Messgeräte 11 in einer vergleichbaren Weise beeinflusst haben muss.

Der Netzwerkknoten 1 ermittelt aus den Informationen über den Kommunikationspartner 10 eine Korrelation zwischen dem erhaltenen Sender-Messdatenabbild 8 und dem in seinem Datenspeicher gespeicherten Empfänger-Messdatenabbild 8'. Diese Korrelation wird auf das Sender-Messdatenabbild 8 angewendet, um den entsprechenden Bereich im Empfänger-Messdatenabbild 8' zu ermitteln (oder umgekehrt) und die beiden Messdatenabbilder zu vergleichen. Wenn die beiden Messdatenabbilder übereinstimmen belegt dies, dass sich der Kommunikationspartner 10 in der selben Messumgebung 13 befindet wie der Netzwerkknoten 1, und daher als vertrauenswürdig angesehen werden kann. Es kann daher nach dieser positiven Validierung für den weiteren Datenaustausch eine Verbindung mit dem Kommunikationspartner 10 hergestellt werden. In der gleichen Weise kann sich natürlich der Netzwerkknoten 1 auch dem Kommunikationspartner 10 gegenüber als vertrauenswürdiges Gerät verifizieren lassen.

Es wäre denkbar dass ein Angreifer eine solchen Datenaustausch abhört und das übertragene Messdatenabbild zur Vorspiegelung einer falschen Identität nochmals verwendet (replay attack). Dies könnte verhindert werden, indem beispielsweise das Messdatenabbild einer bestimmten Zeitperiode nur genau einmal verwendet werden darf, d.h. nach einer einmaligen Übertragung von den Konten im Netzwerk kein zweites Mal akzeptiert wird. Eine andere Maßnahme wäre, wenn der Netzwerkknoten in einem Handshake-Verfahren zuerst eine bestimmte, zurückliegende Zeitperiode verlangt, für die die Daten vom Kommunikationspartner geliefert werden müssen, und diese Zeitperiode für jeden neuen Austausch neu (z.B. zufällig) festlegt.

Gegebenenfalls kann die Verbindung auf bekanntem Wege verschlüsselt erfolgen, um eine Abhören der Kommunikation zu verhindern. Gegebenenfalls kann ein Verschlüsselungsschlüssel auf Basis des Messdatenabbilds 8 erfolgen. Da bereits anhand des Abschnitts des Messdatenabbilds, der in den Verifikationsdaten 9 übermittelt wurde, festgestellt wurde, dass die Messdatenabbilder korrelieren, können Verschlüsselungsschlüssel basierend auf einem anderen (nicht übermittelten) Zeitbereich des Messdatenabbilds erstellt werden, wobei der Netzwerkknoten 1 den Verschlüsselungsschlüssel auf Basis des Empfänger-Messdatenabbilds 8' erstellt und der Kommunikationspartner 10 den Verschlüsselungsschlüssel auf Basis des Sender-Messdatenabbilds 8 erstellt. Diese Möglichkeit, auf beiden Seiten einen identischen Code zu generieren, der jedoch niemals zwischen den beiden Kommunikationspartnern übermittelt werden musste, ermöglicht die Umsetzung sehr sicherer Verschlüsselungsmechanismen.

Beim Aufbau einer sicheren Verbindung ist auch zu berücksichtigen, dass dieser zu Beginn erforderliche Austausch von Messdaten nicht bereits zum Angriff führen kann, etwa indem hier noch un-trusted agiert wird, d.h. dass nur das kleinstmögliche Subset an Funktionen verfügbar ist, ähnlich wie bei einer Firewall in der "maximum protection" Einstellung. Auch muss der Vergleich von lokal verfügbaren Daten eine ausreichende Grundlage für eine Entscheidung (trusted/untrusted) bieten, zum Beispiel indem über eine ausreichend lange Zeit ein ausreichend variables und nicht anders vorhersagbares Mess-Signal verwendet wird. Es ist auch wichtig sicherzustellen, dass der Kommunikationspartner nicht bereits kompromittiert ist. Das könnte beispielsweise der Fall sein, wenn ein normalerweise berechtigtes, lokal vorhandenes System bereits gehackt wurde und damit sowohl Kenntnisse von dieser nur lokal verfügbaren Information hat, als auch bereits von einem Angreifer kontrolliert wird. Wenn diese Voraussetzungen sichergestellt werden, lassen sich sehr hohe Sicherheitsstandards erzielen.

In Fig. 1 ist ein weiteres Messgerät 11' dargestellt, das sich außerhalb der Messumgebung, aber noch innerhalb der Funkreichweite des Datennetzes 6 befindet. Bei dem weiteren Messgerät 11' kann es sich beispielsweise um ein Gerät handeln, das an einem anderen Prüfstand in einem Nebenraum angeordnet ist, es kann jedoch auch ein verstecktes Gerät sein, über das ein Hackangriff auf das Datennetz 6 versucht wird. In beiden Fällen wird jedoch der Netzwerkknoten 1 beim Versuch eines Verbindungsaufbaus durch das weitere Messgerät 11' dieses nicht verifizieren, da dessen Messdatenverlauf einer anderen Messumgebung entspricht und daher auch die Messdatenabbilder 8 nicht übereinstimmen.

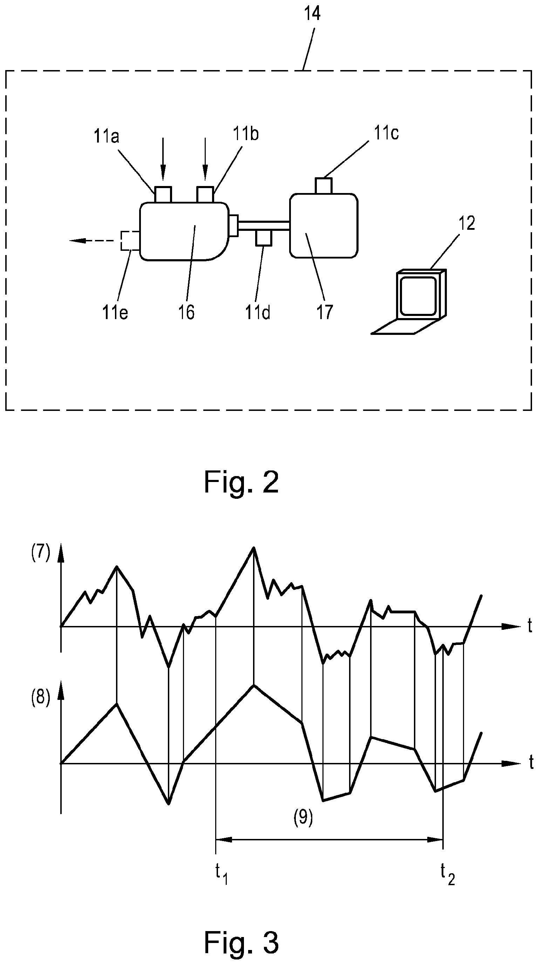

Fig. 2 zeigt die erfindungsgemäße Umsetzung des Verfahrens an einem Motorprüfstand 14. Am Motorprüfstand 14 ist ein Prüfling 16 angeordnet, beispielsweise ein Verbrennungs- oder Elektromotor, gegebenenfalls in Verbindung mit einem Antriebsstrang, der mit einem Dynamometer 17 verbunden ist. An dieser Prüfanordnung sind in herkömmlicher Weise eine Vielzahl von Messgeräten 11a-11d angeordnet, deren Messungen von einem Automatisierungssystem 12 ausgewertet werden. Das Automatisierungssystem 12 regelt auch die Vorgaben für den Prüfling 16 und den Dynamometer 17.

Die Messgeräte 11a-11d erfassen zyklisch Daten ihrer Messumformer (bzw. Sensoren) über eine bestimmte Zeit (z.B. einige Stunden) und speichern diese als Zeitreihe (mit synchronisierter Zeitinformation, s.o.) in ihrem Datenspeicher 5 intern ab. Um Speicherplatz zu sparen kann eine effektive Datenreduktion erfolgen. Zum Beispiel können bestimmte Änderungen (Flanken im Messwert, "Events") erkannt werden, und nur eine Kurzbeschreibung dieses Events gespeichert werden.

Da die verschiedenen Messgeräte 11a-11d an einem Prüfstand die selbe Prüfanordnung beobachten, müssen sie zeitlich korrelierende Events erfasst haben bzw. deren Auswirkung auf die jeweilige Messgröße. Im allgemeinen Fall kann angenommen werden, dass Systeme in bestimmter örtlicher Nähe zueinander bestimmte physikalische Vorgänge zu vergleichbaren Zeit in vergleichbarer Weise erfassen.

Als Beispiel erkennt beim Motorstart eine Dyno-Messung eine Änderung der Drehzahl und des Drehmoments, die Abgas-Messung erkennt einen Anstieg an NOx, die Kraftstoff-Verbrauchsmessung erkennt eine Änderung an der Kraftstoffmenge pro Zeit und die Temperatur-Messung am Zylinder erkennt einen (vielleicht verzögerten) Anstieg der Temperatur. Diese Korrelationen sind entweder bereits anhand der Eigenschaften der jeweiligen Messsensoren bekannt oder für einen Prüfstand ermittelbar.

Jedes Messgerät 11a-11d legt solche "Events" im internen Speicher ab. Nach Vorliegen einer bestimmten Anzahl solcher Events kann mit einer bestimmten Wahrscheinlichkeit angenommen werden, dass bei Übereinstimmung charakteristischer Details (Zeitpunkt, Dauer, Form...) unter Berücksichtigung physikalischer Gegebenheiten (definierte Verzögerungszeit, Abhängigkeit physikalischer Größen etc.) es sich um die selben Events gehandelt hat und daher der selbe Prüfling beobachtet wurde. Je länger also die Beobachtungszeit umso mehr "gemeinsame Geschichte" sammeln die teilnehmenden Geräte und umso sicherer ist es, dass bei Übereinstimmung es sich um Messgeräte am gleichen Prüfstand handelt.

Für eine Identifikation, ein "Ausweisen" eines Gerätes gegenüber einem anderen, kann dieses gemeinsame Wissen als Beweis der Zugehörigkeit präsentiert werden, wie obenstehend beschrieben wurde.

Wenn dieses Wissen nicht im Klartext, sondern kryptographisch verschlüsselt nach außen gegeben wird, kann nur auf das Vorhandensein dieses Wissens im Gerät geschlossen werden, ohne dass dieses Wissen durch Dritte nachgestellt werden kann. Das Fälschen ohne tatsächliches Mit-Messen ist also nicht bzw. nur schwer möglich. Damit kann also zusätzlich zur Information "Messgerät ist am gleichen Prüfling" auch "Messgerät ist tatsächlich ein echtes Messgerät) erkannt werden.

Auf Basis einer Kombination der Messdaten 7 zweier oder mehrerer Messgeräte 11 ist es unter bestimmten Umständen möglich, in Echtzeit eine dritte Messgröße zu errechnen. Dies erlaubt die Erzeugung von "virtuellen Messgeräten", wie etwa dem in Fig. 2 dargestellten virtuellen Messgerät 11e, dessen Messdaten 7 auf Basis der Messungen der beiden Messgeräte 11a und 11b erstellt wird.

Als praktisches Beispiel könnte etwa das Messgerät 11a die dem Prüfling 16 zugeführte Treibstoffmenge und das Messgerät 11b die zugeführte Luftmenge messen. Daraus lässt sich über bekannte Zusammenhänge ein Wert für die Abgasmenge ermitteln. Dieser Wert für die Abgasmenge kann somit als Messdaten 7 des virtuellen Messgeräts 11e dem Automatisierungssystem 12 bereitgestellt werden, wenn die beiden Messgeräte 11a und 11b in dem Ad-Hoc-Netzwerk miteinander kommunizieren. Falls das Automatisierungssystem 12 auch in das Ad-Hoc-Netzwerk eingebunden ist, können virtuelle Messgeräte auch vom Automatisierungssystem 12 erstellt werden. Die anderen Messgeräte 11c und 11d können entweder auch in das Ad-Hoc-Netzwerk eingebunden sein, oder es kann sich um ältere Geräte oder um Geräte anderer Hersteller handeln, die dann ganz normal verwendet werden können.

Fig. 3 verdeutlicht in beispielhafter Weise den Zusammenhang zwischen den von einem Messgerät 11 aufgezeichneten Messdaten 7 und einem auf Basis der Messdaten 7 erstellten Messdatenabbild 8. Im dargestellten Fall weist das Messdatenabbild 8 eine geringere Datendichte auf als die Messdaten 7, beispielsweise durch Anwendung einer geringeren Abtastrate oder durch Anwendung anderer verlustfreier oder verlustbehafteter Datenkompressionsverfahren. Die Datendichte ist jedoch ausreichend hoch gewählt, um bestimmte Ereignisse bzw. Events, die auf den Verlauf der Messdaten 7 Einfluss genommen haben, auch im Messdatenabbild 8 erkennen zu können. Ereignisse können beispielsweise anhand positiver und/oder negativer Wertspitzen und/oder Steigungen von Flankenbereichen erkannt werden. Ein aus dem Messdatenabbild 8 ausgewählter Bereich (zwischen einer Anfangszeit t₁ und einer Endzeit t₂) kann als Verifikationsdaten 9 verwendet werden. Die Verifikationsdaten 9 entsprechen somit einem Messdatenabbild 8 in einem bestimmten Zeitbereich.

Es wäre jedoch auch möglich, die Verifikationsdaten 9 auf eine andere Weise zu erstellen, beispielsweise könnte der Abstand zwischen jeweils zwei Wertspitzen in einem bestimmten Zeitbereich als Datenreihe verwendet werden, um die Verifikationsdaten 9 zu erstellen. Auch in diesem Fall entsprechen die Verifikationsdaten 9 dem Messdatenabbild 8. Die Verifikationsdaten können jedoch auch auf anderen Eigenschaften des Messdatenabbilds 8 basieren, etwa auf Steigungsverläufen, Nullstellen, etc. In jedem Fall enthalten die Verifikationsdaten jeweils zumindest einen Teil der Daten des Messdatenabbilds 8. Die Verifikationsdaten 9 können auch verschlüsselt sein.

Gegebenenfalls kann auf Basis einer aus dem Messdatenabbild 8 ermittelten Datenreihe auch der obenstehend in Zusammenhang mit der Beschreibung von Fig. 1 angeführte Verschlüsselungsschlüssel generiert werden.

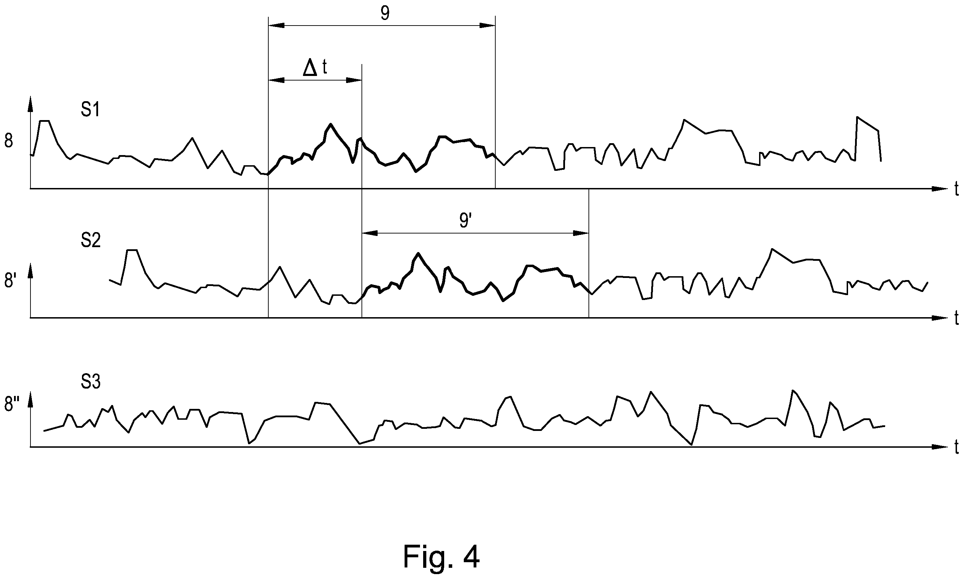

In Fig. 4 ist der Verlauf von drei Messdatenabbildern 8, 8' und 8" dargestellt, wie sie von drei Messgeräten 11 eines Sensornetzwerks erstellt werden könnten. Die drei Messgeräte 11 sind in Fig. 4 als Knoten S1, S2 und S3 bezeichnet. Die Messdatenabbilder 8, 8', 8" können entweder (wie in Fig. 3 erläutert) ein auf Basis der jeweiligen Messdaten 7 erstellte Datenverläufe mit verringerter Datenrate sein, oder sie können den Messdaten 7 entsprechen.

Im dargestellten Beispiel messen die Knoten S1 und S2 am gleichen Prozess, d.h. ihre beiden Beobachtungen korrelieren. Der Verlauf der Messdaten 7 von S1 und S2 stimmt daher überein, wobei S2 gegenüber S1 um einen Versatz Δt zeitlich versetzt ist. Es könnte aber auch eine beliebige andere erkennbare Korrelation zwischen den beiden Messdatenverläufen herrschen, beispielsweise auch nur eine "leichte" Korrelation, die sich zum Beispiel ergibt, wenn Schwingungen an verschiedenen Stellen eines Motors gemessen werden.

Der Knoten S3 misst an einem anderen Prozess, es besteht daher keine Korrelation zu S1 und S2.

Wenn nun Knoten S1 zu Knoten S2 eine Kommunikation aufbauen will (z.B. indem er wie oben beschrieben eine Mitteilung M schickt), kann er seine Legitimität nachweisen, indem er einen Abschnitt des Messdatenabbildes 8 dieser Mitteilung M hinzufügt. Dieser Abschnitt bildet die ist in Fig. 4 dargestellten Verifikationsdaten 9.

Auf Basis der Korrelation zwischen S1 und S2 findet S2 in seinen eigenen Aufzeichnungen des Messdatenabbildes 8' den Abschnitt 9', der den erhaltenen Verifikationsdaten 9 entspricht. In der Darstellung der Fig. 4 ist das Empfänger-Messdatenabbild 8' gegenüber dem Empfänger-Messdatenabbild 8 lediglich zeitverschoben, wobei der Datenverlauf ansonsten übereinstimmt. Es können jedoch auch komplexere Korrelationen bestehen, aus denen S2 darauf schließen kann, dass S1 am gleichen Prozess gemessen hat, und daher nicht nur lokal nahe, sondern auch vertrauenswürdig ist.

Es folgt dann beispielsweise der Aufbau einer verschlüsselten, vertrauenswürdigen Kommunikation. Die Kenntnis eines Teils der Geschichte des Prozesses dient als Identitätsnachweis. Es kann damit andere Mechanismen ersetzen, zum Beispiel ein Zertifikat, wie es bei trusted Websites (https) verwendet wird. Dies bietet den Vorteil, dass ein aufwendiges (meist einen Benutzereingriff erforderndes) Zertifikatmanagement nicht notwendig ist.

Gegebenenfalls könnte der Knoten S2 umgekehrt Daten (von einer anderen Periode) an S1 zurückschicken, um so auch S1 zu bestätigen dass S2 ein legitimer Kommunikationspartner ist.

### Bezugszeichen:

Netzwerkknoten 1
Messumformer 2
Drahtlosschnittstelle 3
Prozessoreinheit 4
Datenspeicher 5
Datennetz 6
Messdaten 7
Sender-Messdatenabbild 8
Empfänger-Messdatenabbild 8'
Verifikationsdaten 9
Kommunikationspartner 10
Messgerät 11
Automatisierungssystem 12
Messumgebung 13
Motorprüfstand 14
Zeitsignalgeber 15
Prüfling 16
Dynamometer 17

## Patentansprüche

1. Verfahren zum Aufbau einer Kommunikationsverbindung zwischen einem Netzwercknoten (1) und einem Kommunikationspartner (10) in einem Datennetz (6), wobei der Netzwerkknoten (1) zumindest eine Mitteilung (M) über eine Drahtlosschnittstelle (3) von dem Kommunikationspartner (10) empfängt und wobei der Mitteilung (M) Verifikationsdaten (9) beigefügt sind, **dadurch gekennzeichnet, dass** die Verifikationsdaten (9) ein Sender-Messdatenabbild (8) beinhalten, welches für vom Kommunikationspartner (10) in einer vorhergehenden Aufzeichnungsperiode in einem bestimmten Zeitbereich erfasste Messdaten (7) repräsentativ ist, wobei der Netzwerkknoten (1) den Kommunikationspartner (10) verifiziert, indem das in den empfangenen Verifikationsdaten (9) enthaltene Sender-Messdatenabbild (8) anhand einer dem Netzwerkknoten (1) bekannten oder/oder vom Kommunikationspartner (10) dem Netzwerkknoten (1) mitgeteilten Korrelation mit einem Empfänger-Messdatenabbild (8') verglichen wird, das unabhängig vom Sender-Messdatenabbild (8) erstellt wurde und das in einem Datenspeicher (5) des Netzwerkknotens (1) gespeichert ist, und wobei eine Übereinstimmung der Messdatenabbilder belegt, dass sich der Kommunikationspartner (10) in der selben Messumgebung (13) befindet, wie der Netzwerkknoten (1).

2. Verfahren nach Anspruch 1, **dadurch gekennzeichnet, dass** der Netzwerkknoten (1) und der Kommunikationspartner (10) unabhängig voneinander ein Messgerät (11) oder ein Automatisierungssystem (12) einer Messumgebung (13) sind.

3. Verfahren nach Anspruch 1 oder 2, **dadurch gekennzeichnet, dass** der Netzwercknoten (1) auf Basis des Sender-Messdatenabbilds (8) einen Verschlüsselungsschlüssel für eine verschlüsselte Kommunikation mit dem Kommunikationspartner (10) erstellt.

4. Verfahren nach einem der Ansprüche 1 bis 3, **dadurch gekennzeichnet, dass** der Netzwerkknoten (1) auf Basis des Empfänger-Messdatenabbilds (8') einen Verschlüsselungsschlüssel für eine verschlüsselte Kommunikation mit dem Kommunikationspartner (10) erstellt.

5. Verfahren nach einem der Ansprüche 1 bis 4, **dadurch gekennzeichnet, dass** der Netzwerkknoten (1) nach der Verifizierung des Kommunikationspartners (10) auf Basis der Korrelation zumindest einen virtuellen Netzwerkknoten (11c) erstellt.

6. Verfahren nach einem der Ansprüche 1 bis 5, **dadurch gekennzeichnet, dass** das Datennetz (6) ein Ad-Hoc-Netzwerk ist.

7. Netzwerkknoten (1) mit zumindest einem Messumformer (2), zumindest einer Drahtlosschnittstelle (3), zumindest einer Prozessoreinheit (4) und zumindest einem Datenspeicher (5), wobei in dem Netzwerkknoten (1) eine vom Netzwerkknoten (1) ausführbare Programmlogik implementiert ist, **dadurch gekennzeichnet, dass** der Netzwerkknoten (1) beim Ausführen der Programmlogik ein Verfahren gemäß einem der Ansprüche 1 bis 6 ausführt.

8. Netzwerkknoten (1) nach Anspruch 7, **dadurch gekennzeichnet, dass** der Netzwercknoten (1) ein Messgerät (11) für eine Messumgebung (13) ist.

9. Netzwerkknoten (1) nach Anspruch 7, **dadurch gekennzeichnet, dass** der Netzwercknoten (1) ein Messgerät (11) oder ein Automatisierungssystem (12) für einen Motorprüfstand (14) ist.

## Claims

1. A method for establishing a communication connection between a network node (1) and a communication partner (10) in a data network (6), wherein the network node (1) receives at least one message (M) via a wireless interface (3) from the communication partner (10) and wherein verification data (9) is attached to the verification message (M), **characterized in that** the verification data (9) comprise a transmitter measured data image (8), which is representative of measured data (7) acquired by the communication partner (10) in a preceding recording period in a certain time range, wherein the network node (1) verifies the communication partner (10) by a comparison, based on a correlation known to the network node (1) and/or communicated by the communication partner (10) to the network node (1), of the transmitter measured data image (8) contained in the received verification data (9) with a receiver measured data image (8'), which has been created separately from the transmitter measured data image (8), and which is stored in a data memory (5) of the network node (1) and wherein matching measured data images prove that the communication partner (10) is in the same measurement environment (13) as the network node (1).

2. The method according to claim 1, **characterized in that** the network node (1) and the communication partner (10) are a measuring device (11) or an automation system (12) of a measurement environment (13) independent of one another.

3. The method according to claim 1 or 2, **characterized in that** the network node (1) creates an encryption key for an encrypted communication with the communication partner (10) based on the transmitter measured data image (8).

4. The method according to any of claims 1 through 3, **characterized in that** the network node (1) creates an encryption key for an encrypted communication with the communication partner (10) on the basis of the receiver measured data image (8').

5. The method according to any of claims 1 through 4, **characterized in that** after the verification of the communication partner (10), the network node (1) creates at least one virtual network node (11c) on the basis of the correlation.

6. The method according to any of claims 1 through 5, **characterized in that** the data network (6) is an ad hoc network.

7. A network node (1), including at least one transducer (2), at least one wireless interface (3), at least one processor unit (4) and at least one data memory (5), wherein program logic executable by the network node (1) is implemented in the network node (1), **characterized in that** the network node (1) carries out a method according to one of claims 1 through 5 when executing the program logic.

8. The network node (1) according to claim 7, **characterized in that** the network node (1) is a measuring device (11) for a measuring environment (13).

9. The network node (1) according to claim 7, **characterized in that** the network node (1) is a measuring device (11) or an automation system (12) for an engine test bench (14).

## Revendications

1. Procédé d'établissement d'une liaison de communication entre un nœud de réseau (1) et un partenaire de communication (10) dans un réseau de données (6), le nœud de réseau (1) recevant au moins un message (M) du partenaire de communication (10) par l'intermédiaire d'une interface sans fil (3) et des données de vérification (9) étant attachées au message (M), **caractérisé en ce que** les données de vérification (9) contiennent une image de données de mesure d'émetteur (8), laquelle représente des données de mesure (7) détectées par le partenaire de communication (10) dans une période d'enregistrement précédente dans une plage temporelle déterminée, le nœud de réseau (1) vérifiant le partenaire de communication (10) en comparant, à l'aide d'une corrélation connue du nœud de réseau (1) et/ou communiquée au nœud de réseau (1) par le partenaire de communication (10), l'image de données de mesure d'émetteur (8) contenue dans les données de vérification reçues (9) à une image de données de mesure de récepteur (8'), laquelle a été générée indépendamment de l'image de données de mesure d'émetteur (8) et est stockée dans une mémoire de données (5) du nœud de réseau (1), et une correspondance entre les images de données de mesure prouvant que le partenaire de communication (10) se trouve dans le même environnement de mesure (13) que le nœud de réseau (1).

2. Procédé selon la revendication 1, **caractérisé en ce que** le nœud de réseau (1) et le partenaire de communication (10) sont, indépendamment l'un de l'autre, un appareil de mesure (11) ou un système d'automatisation (12) d'un environnement de mesure (13).

3. Procédé selon la revendication 1 ou 2, **caractérisé en ce que** le nœud de réseau (1) génère, sur la base de l'image de données de mesure d'émetteur (8), une clé de cryptage destinée à la communication cryptée avec le partenaire de communication (10).

4. Procédé selon l'une des revendications 1 à 3, **caractérisé en ce que** le nœud de réseau (1) génère, sur la base de l'image de données de mesure de récepteur (8'), une clé de cryptage destinée à la communication cryptée avec le partenaire de communication (10).

5. Procédé selon l'une des revendications 1 à 4, **caractérisé en ce que** le nœud de réseau (1) génère, sur la base de la corrélation, au moins un nœud de réseau virtuel (11c) après la vérification du partenaire de communication (10).

6. Procédé selon l'une des revendications 1 à 5, **caractérisé en ce que** le réseau de données (6) est un réseau ad hoc.

7. Nœud de réseau (1) comportant au moins un transducteur de mesure (2), au moins une interface sans fil (3), au moins une unité de traitement (4) et au moins une mémoire de données (5), une logique de programme pouvant être exécutée par le nœud de réseau (1) étant mise en œuvre dans le nœud de réseau (1), **caractérisé en ce que** le nœud de réseau (1) exécute un procédé selon l'une des revendications 1 à 6 lors de l'exécution de la logique de programme.

8. Nœud de réseau (1) selon la revendication 7, **caractérisé en ce que** le nœud de réseau (1) est un appareil de mesure (11) destiné à un environnement de mesure (13).

9. Nœud de réseau (1) selon la revendication 7, **caractérisé en ce que** le nœud de réseau (1) est un appareil de mesure (11) ou un système d'automatisation (12) destiné à un banc d'essai moteur (14).
